(19) Europäisches Patentamt

European Patent Office

Office européen des brevets

(11) Veröffentlichungsnummer: **0 437 885 A2**

# (12) EUROPÄISCHE PATENTANMELDUNG

(21) Anmeldenummer: 90203403.2

(22) Anmeldetag: 18.12.90

(51) Int. Cl.⁵: **H04B 3/14**

(30) Priorität: 18.01.90 DE 4001299

(43) Veröffentlichungstag der Anmeldung:
**24.07.91 Patentblatt 91/30**

(84) Benannte Vertragsstaaten:
**DE FR GB**

(71) Anmelder: **Philips Patentverwaltung GmbH
Wendenstrasse 35 Postfach 10 51 49
W-2000 Hamburg 1(DE)**

(84) **DE**

Anmelder: **N.V. Philips' Gloeilampenfabrieken**

Groenewoudseweg 1
**NL-5621 BA Eindhoven(NL)**

(84) **FR GB**

(72) Erfinder: **Heinlein, Werner
Rosenstrasse 13
W-8501 Grosshabersdorf(DE)**

(74) Vertreter: **Peuckert, Hermann, Dipl.-Ing. et al
Philips Patentverwaltung GmbH
Wendenstrasse 35 Postfach 10 51 49
W-2000 Hamburg 1(DE)**

(54) **Frequenzgangentzerrer.**

(57)
2.1. Die Erfindung betrifft einen Frequenzgangentzerrer insbesondere für Breitbandnetze. Dabei soll der Einfluß von parasitären Kapazitäten auf das Frequenzverhalten verringert werden.
2.2. Es wird vorgeschlagen, daß parallel zu einem Serienwiderstand eine erste Spule in Reihe mit einem Kondensator, einem Widerstand und einer zweiten Spule liegt, wobei die Spulen einen bifilar gewickelten Übertrager bilden. Der Übertrager weist zwei Hauptinduktivitäten und zwei Teilstreuinduktivitäten auf, wobei die Hauptinduktivitäten die parasitären Kapazitäten abschalten und parallel zum Serienwiderstand als wirksamer Serienresonanzkreis die zwei Teilstreuinduktivitäten in Reihe mit dem Widerstand und dem Kondensator liegen.

FIG.1

## FREQUENZGANGENTZERRER

Die Erfindung betrifft einen Frequenzgangentzerrer insbesondere für Breitbandnetze.

In Breitbandnetzen, beispielsweise in Kabelfernsehanlagen, sind in vorgegebenen Kabelabschnitten zur Kompensation der Kabeldämpfung Breitbandverstärker eingeschaltet. Dabei kann es durch Verstärkungstoleranzen im Frequenzgang der einzelnen Verstärker innerhalb einer Übertragungsstrecke des Breitbandnetzes zu Verstärkungsfehlern eines gewünschten glatten Frequenzganges kommen. Solche Verstärkungsfehler können durch Frequenzgangentzerrer kompensiert werden. Dazu können einzelnen Verstärkern innerhalb der Übertragungsstrecke Dämpfungsglieder mit einer Grunddämpfung vorgeschaltet werden, deren Dämpfung durch zusätzlich vorhandene Resonanzkreise in einem einstellbaren Frequenzbereich aufhebbar ist. Zur Festlegung einer Grunddämpfung kann dem Verstärker ein Serienwiderstand vorgeschaltet werden. Diesem kann ein aus einem Widerstand, einem Kondensator und einer Spule gebildeter Serienresonanzkreis parallelgeschaltet werden. Durch den Wert des Widerstands kann die Grunddämpfung bei einer durch den Wert des Kondensators festlegbaren Resonanzfrequenz vermindert bzw. aufgehoben werden. Das Frequenzverhalten eines solchen Frequenzgangentzerrers kann durch parasitäre Kapazitäten, beispielsweise parasitäre Massekapazitäten, negativ beeinflußt werden, da die parasitären Massekapazitäten und die Spule einen Resonanzstörkreis bilden. Je kleiner der Kapazitätswert des Kondensators des Serienresonanzkreises wird, um so mehr tritt die störende Wirkung des Resonanzstörkreises in Erscheinung.Neben der gewünschten Verringerung der Dämpfung bei der Resonanzfrequenz des Serienresonanzkreises tritt, insbesondere bei höheren Resonanzfrequenzen, eine unerwünschte Erhöhung der Dämpfung auf. Kommt der Wert des Kondensators in die Nähe des Wertes der parasitären Kapazitäten, so kann die Wirkung des Resonanzstörkreises größer als die des Serienresonanzkreises selbst werden, was zu einer unerwünschten Erhöhung der Dämpfung bei der Störresonanzfrequenz anstatt zur gewünschten Verringerung der Dämpfung bei der Resonanzfrequenz des Serienresonanzkreises führt.

Der Erfindung liegt die Aufgabe zugrunde, einen Frequenzgangentzerrer anzugeben, bei dem der Einfluß von parasitären Kapazitäten auf das Frequenzverhalten verringert ist und der bis zu hohen Frequenzen einsetzbar ist.

Diese Aufgabe wird dadurch gelöst, daß parallel zu einem Serienwiderstand eine erste Spule in Reihe mit einem Kondensator, einem Widerstand und einer zweiten Spule liegt, wobei die Spulen einen bifilar gewickelten Übertrager bilden.

Der Übertrager weist zwei Hauptinduktivitäten sowie zwei Teilstreuinduktivitäten auf. Dabei können von aus den Hauptinduktivitäten und parasitären Kapazitäten gebildete Resonanzstörkreise jedoch nicht wirksam werden, da die Hauptinduktivitäten insbesondere bei hohen Frequenzen einen hohen Widerstand aufweisen und die parasitären Kapazitäten praktisch abschalten. Auf die Wirkung eines aus den zwei Teilstreuinduktivitäten in Reihe mit dem Kondensator und dem Widerstand gebildeten Serienresonanzkreises hat die Güte des Übertragers keinen Einfluß, da sich aufgrund des für die Hauptinduktivitäten gegenseitig aufhebenden magnetischen Flusses als Folge der bifilaren Wicklungdes Übertragers der Einfluß der Hauptinduktivitäten aufhebt. Ein Einfluß von parasitären Kapazitäten ist somit eliminiert, wodurch der Frequenzgangentzerrer bis zu hohen Frequenzen von über 650 MHz einsetzbar ist.

Vorteilhafte Ausgestaltungsformen sind in den Unteransprüchen enthalten.

Im folgenden wird die Erfindung anhand der in den Figuren 1 bis 4 dargestellten Ausführungsbeispiele näher erläutert.

Es zeigen:

Fig. 1 eine Übertragungsstrecke mit einem Frequenzgangentzerrer.

Fig. 2 eine Übertragungsstrecke mit einem Frequenzgangentzerrer mit einem schematisch dargestellten bifilar gewickelten Übertrager.

Fig. 3 das Ersatzschaltbild eines Frequenzgangentzerrers.

Fig. 4 das wirksame Ersatzschaltbild eines Frequenzgangentzerrers.

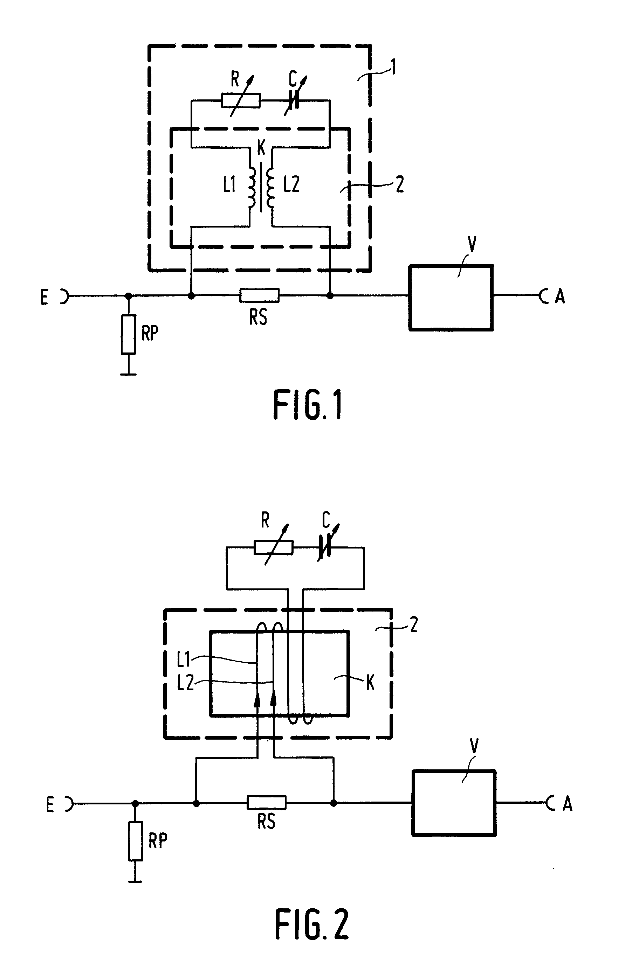

Bei der in Fig. 1 dargestellten Schaltungsanordnung liegt zwischen einem Eingang E und einem Ausgang A einer Übertragungsstrecke für Kabelfernsehanlagen ein Serienwiderstand RS in Reihe mit einem Verstärker V. Der Eingang E ist über einen Parallelwiderstand RP zur Anpassung des Eingangswiderstands des Verstärkers V an Massepotential angeschlossen. Parallel zum Serienwiderstand RS liegt eine Reihenschaltung 1 aus einer ersten Spule L1, einem einstellbaren Widerstand R, einem einstellbaren KondensatorC und einer zweiten

Spule L2. Die Spulen L1, L2 sind bifilar gewikkelt und miteinander induktiv gekoppelt. Dabei wird bei dem in der Fig. 1 dargestellten Ausführungsbeispiel die Kopplung mittels eines gemeinsamen Kerns K gebildet, so daß die Spulen L1, L2 in Verbindung mit dem Kern K einen Übertrager 2 bilden, wobei der Kern 2 aus einem ferromagnetischen Material besteht.

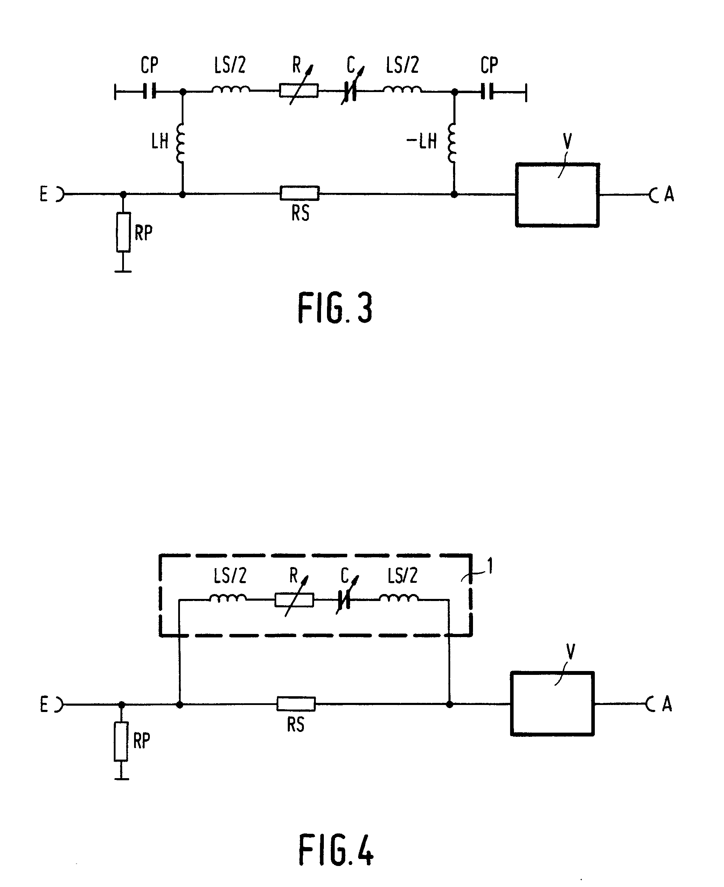

Die Reihenschaltung 1 stellt einen Serienresonanzkreis dar, dessen Güte mit Hilfe des einstellbaren Widerstands R veränderbar ist. Durch den einstellbaren Kondensator C ist die Resonanzfrequenz des Serienresonanzkreises 1 bestimmbar. Der aus den Spulen L1, L2 und deren Kern K gebildete Übertrager 2 weist aufgrund der bifilaren Wicklung zwei Hauptinduktivitäten mit jeweils umgeleiteten Vorzeichen sowie eine aus zwei Teilstreuinduktivitäten zusammengesetzte Streuinduktivität (Fig. 3) auf, wobei die Induktivitätswerte der Hauptinduktivitäten sehr viel größer als die der Teilstreuinduktivitäten sind. Dabei können aus den Hauptinduktivitäten und parasitären Kapazitäten gebildete Resonanzstörkreise nicht wirksam werden, da die Hauptinduktivitäten insbesondere bei hohen Frequenzen auch einen höheren induktiven Widerstand aufweisen, und so die insbesondere bei hohen Frequenzen wirksamen parasitären Kapazitäten praktisch abschalten. Dadurch ist sichergestellt, daß die Schaltung bis zu hohen Frequenzen (größer 650 MHz) einsetzbar ist. Da sich aufgrund der bifilaren Wicklung des Übertragers 2 der magnetische Fluß der beiden Hauptinduktivitäten aufhebt, d.h. die Hauptinduktivitäten unterschiedliche Vorzeichen aufweisen, haben diese auf das Verhalten des Serienresonanzkreises keinen Einfluß. Parallel zum Serienwiderstand ergibt sich somit ein wirksamer Serienresonanzkreis 1, der sich aus den zwei Teilstreuinduktivitäten in Reihe mit dem Kondensator und dem Widerstand zusammensetzt (vgl. Fig. 4).

Fig. 2 zeigt eine Übertragungsstrecke mit einem Frequenzgangentzerrer, wobei schematisch der Wicklungsaufbau des bifilar gewickelten Übertragers 2 hervorgehoben ist. Die Schaltungsanordnung mit dem Serienwiderstand RS, dem Parallelwiderstand RP und dem Verstärker V liegt, wie bereits in der Beschreibung zur Fig. 1 erläutert wurde, zwischen dem Eingang E und dem Ausgang A eines Übertragungsnetzes für Kabelfernsehanlagen. Die Wicklungsanfänge der Spulen L1, L2 sind an den Serienwiderstand RS angeschlossen und bifilar um den Kern K gewickelt. Die Wicklungsenden der Spulen L1, L2 sind an die Reihenschaltung aus dem einstellbaren Widerstand R und dem einstellbaren Kondensator C angeschlossen. Die Wicklungsrichtung der Spulen L1, L2 ist durch eingezeichnete Pfeile verdeutlicht. In vorteilhafter Weise ist der Kern K als Doppellochkern ausgebildet, wodurch bei bifilarer Wicklung der Wert der Teilstreuinduktivitäten LS/2 in engen Toleranzen dimensionierbar ist.

Fig. 3 zeigt eine Übertragungsstrecke mit einem Frequenzgangentzerrer mit einem Ersatzschaltbild des in den Figuren 1, 2 dargestellten bifilar gewickelten Übertragers 2. Dabei sind die Hauptinduktivitäten LH, -LH des Übertragers 2 an den Serienwiderstand RS angeschlossen und liegen in Reihe zu den zwei Teilstreuinduktivitäten LS/2, die über eine Reihenschaltung aus dem einstellbaren Widerstand R und dem einstellbaren Kondensator C miteinander verbunden sind. Der gemeinsame Abgriff der Hauptinduktivitäten LH, -LH und der Teilstreuinduktivität LS/2 und dem Massepotential liegt jeweils eine parasitäre Kapzität CP.

Aus den Hauptinduktivitäten LH, -LH und den parasitären Kapazitäten CP werden zwar Resonanzstörkreise gebildet, deren Resonanzstörungen jedoch nicht wirksam werden können, da die Güte der Resonanzstörkreise aufgrund des für die Hauptinduktivitäten LH, -LH wirksamen Materials des Kerns 1 sehr gering ist. Damit werden die parasitären Kapazitäten CP durch die Hauptinduktivitäten LH, -LH abgeschaltet, die insbesondere bei hohen Frequenzen auch einen hohen induktiven Widerstand aufweisen. Der Einfluß der parasitäten Kapazitäten CP ist somit eliminiert, wodurch der Frequenzgangentzerrer bis zu hohen Frequenzen von über 650 MHz einsetzbar ist.

Fig. 4 zeigt eine Übertragungsstrecke einer Kabelfernsehanlage mit einem Frequenzgangentzerrer mit dem wirksamen Ersatzschaltbild des in Fig. 3 dargestellten Ersatzschaltbildes. Dabei wird der Serienresonanzkreis 1 aus den zwei Teilstreuinduktivitäten LS/2 in Reihe mit dem einstellbaren Widerstand R und dem einstellbaren Kondensator C gebildet. Wie bereits in der Beschreibung zu den Figuren 1 bis 3 erläutert wurde, haben die Hauptinduktivitäten (vgl. Fig. 3) auf das Verhalten des Serienresonanzkreises 1 keinen Einfluß, da sich der magnetische Fluß der beiden Hauptinduktivitäten LH, -LH gegenseitig aufhebt.

**Patentansprüche**

1.  Frequenzgangentzerrer insbesondere für Breitbandnetze,
    dadurch gekennzeichnet,
    daß parallel zu einem Serienwiderstand (RS) eine erste Spule (L1) in Reihe mit einem Kondensator (C), einem Widerstand (R) und einer zweiten Spule (L2) liegt, wobei die Spulen (L1, L2) einen bifilar gewickelten Übertrager (2) bilden.

2. Frequenzgangentzerrer nach Anspruch 1,
dadurch gekennzeichnet,
daß der Übertrager (2) zwei Hauptinduktivitäten (LH, -LH) und zwei Teilstreuinduktivitäten (LS/2) aufweist, wobei sich die zwei Hauptinduktivitäten (LH, -LH) in ihrer Wirkung gegeneinander aufheben.

3. Frequenzgangentzerrer nach einem der Ansprüche 1 oder 2,
dadurch gekennzeichnet,
daß parallel zum Serienwiderstand (RS) als wirksamer Serienresonanzkreis (1) zwei Teilstreuinduktivitäten (LS/2) des Übertragers (2) in Reihe mit dem Widerstand (R) und dem Kondensator (C) liegen.

4. Frequenzgangentzerrer nach einem der Ansprüche 1 bis 3,
dadurch gekennzeichnet,
daß die Spulen (L1, L2) einen gemeinsamen Kern (K) aus ferromagnetischem Material aufweisen.

5. Frequenzgangentzerrer nach einem der Ansprüche 1 bis 4,
dadurch gekennzeichnet,
daß der Kern (K) als Doppellochkern ausgebildet ist.

6. Frequenzgangentzerrer nach einem der Ansprüche 1 bis 5,
dadurch gekennzeichnet,
daß der Widerstand (R) und der Kondensator (C) jeweils einstellbar sind.

FIG.1

FIG.2

FIG.3

FIG.4